# EUROPEAN PATENT APPLICATION

(11) **EP 1 845 458 A1**
(43) Date of publication of application: **17.10.2007**
(21) Application number: 06711985.9
(22) Date of filing: 19.01.2006
(51) Int. Cl.: G06F 17/30, G06F 13/00

(54) **INFORMATION TERMINAL, AND INFORMATION PROVIDING METHOD**

(30) Priority: 19.01.2005 JP 2005011269
(71) Applicant: MATSUSHITA ELECTRIC INDUSTRIAL CO., LTD., Osaka 571-8501 (JP)
(72) Inventor: YONEMOTO, Yoshifumi Mat. Elect. Ind. Co. Ltd., IPROC, Osaka-shi, Osaka 540-6207 (JP)
(74) Representative: Grünecker, Kinkeldey, Stockmair & Schwanhäusser Anwaltssozietät
(86) International application number: PCT/JP2006/300739
(87) International publication number: WO 2006/077922

(57) **Abstract**

A subject of the present invention is to provide an information terminal capable of protecting user's private information and also providing preferentially the content that is evaluated to be more appropriate to the user.

There are provided a receiving portion (101) for receiving information-containing a content, an information storing portion (104) for storing trustworthiness information being set previously in answer to recommender information of the content, an information evaluating portion (103) for extracting the recommender information of the content contained in received information and degree-of-recommendation information of the content and calculating an evaluation value of the content based on the trustworthiness information being set previously in answer to the recommender information of the content and the degree-of-recommendation information of the content, and an information regenerating/processing portion (106) for selecting and regenerating the content having a high evaluation value.

## Description

### <Technical Field>

The present invention relates to an information terminal for receiving contents distributed in a broadcast-like manner and an information providing method.

### <Background Art>

The advertising providing system for distributing the advertising in answer to position or taste of consumers has been proposed. This advertising providing system is constructed as the advertising providing system has the communication industry terminal, consumer terminals, and enterprise terminals, which are connected mutually via the communication line. The communication industry terminal has a means for storing advertising information and position information and taste information of the consumers, and a means for selecting the advertising information every consumer while taking account of position information and taste information of the consumer and a time and then transmitting the advertising information to the concerned consumer (see Patent Literature 1).

Also, the mobile terminal capable of collecting the contents desired by the user from the contents distributed in a broadcast-like manner has been proposed. This mobile terminal has a content receiving means for receiving the content that is distributed in a broadcast-like manner within a particular regional area, and also has a memory for recording the content, an information condition setting means for setting beforehand information conditions (category and keyword) of the content that is to be recorded in the memory, a filtering means for recording only the content that satisfies the information conditions (category and keyword) in the memory, and a reading/operating means for reading and operating the content that is recorded in the memory (see Patent Literature 2).
Patent Literature 1: JP-A-2001-282834
Patent Literature 2: JP-A-2002-176403

### <Disclosure of the Invention>

### <Problems that the Invention is to Solve>

In the above advertising providing system, the user (consumer) must provide private information (position information and taste information) to the communication industry terminal side. Therefore, such a problem exists that it is feared that misappropriation and leakage of privacy information are caused.

Also, in the above mobile terminal, the received information are filtered by setting the category and the keyword, but the user cannot know the context by the search of the keyword. Therefore, such a problem exists that the appropriate information selection not always carried out.

The present invention has been made in view of the above circumstances, and it is an object of the present invention to provide an information terminal and an information providing method, capable of protecting user's private information and also providing preferentially the content that is evaluated to be more appropriate to the user.

### <Means for Solving the Problems>

An information terminal according to the present invention includes a receiving portion for receiving information containing a content; a means for storing trustworthiness information being set previously in answer to recommender information of the content; and an information evaluating portion for extracting the recommender information of the content contained in received information and a degree-of-recommendation of the content, and then calculating an evaluation value of the content based on the trustworthiness information being set previously in answer to recommender information of the content and the degree-of-recommendation of the content.

According to this configuration, the evaluation value of the content can be calculated based on the trustworthiness information being set previously to the recommender information of the content and the degree-of-recommendation of the content. Therefore, the content whose evaluation value is high can be provided preferentially.

Also., an information terminal according to the present invention includes a receiving portion for receiving information containing a content; a means for storing an attribute of an information receiver end being set previously; a means for storing trustworthiness information being set previously in answer to recommender information of the content; a target hit deciding portion for deciding whether or not the information receiver end corresponds to user's conditions, based on user's condition information that designates the attribute of the information receiver end contained in received information and the attribute of the information receiver end being set previously; and an information evaluating portion for extracting the recommender information of the content contained in the received information and a degree-of-recommendation information of the content given when the information receiver end corresponds to the user's conditions or a degree-of-recommendation information of the content given when the information receiver end does not correspond to the user's conditions, and then calculating an evaluation value of the content based on the trustworthiness information being set previously in answer to the recommender information of the content and the degree-of-recommendation information given when the information receiver end corresponds to the user's conditions when the information receiver end satisfies the user's conditions, or calculating an evaluation value of the content based on the trustworthiness information being set previously in answer to the recommender information of the content and the degree-of-recommendation information given when the information receiver end does not correspond to the user's conditions when the information receiver end does not satisfy the user's conditions.

According to this configuration, the evaluation value corresponding to the trustworthiness of the recommender and the user's conditions can be obtained. Therefore, the content that is appropriate to the attribute of the information receiver end can be provided preferentially.

Also, an information terminal according to the present invention includes a receiving portion for receiving information containing a content; a means for storing trustworthiness information being set previously in answer to recommender information of the content; a regenerated information analyzing portion for analyzing regenerating/controlling information indicating a method of regenerating the content that is contained in received information and composed of one media or more; an information evaluating portion for extracting the recommender information of the content contained in the received information and a degree-of-recommendation information of the content, and then calculating an evaluation value of the content based on the trustworthiness information being set previously in answer to the recommender information of the content and the degree-of-recommendation information of the content; and an information regeneration processing portion for regenerating received content in answer to the regenerating/controlling information and the evaluation value of the content.

According to this configuration, the evaluation value of the content can be calculated based on the trustworthiness information being set previously to the recommender information of the content and the degree-of-recommendation of the content. Therefore, the content whose evaluation value is high can be provided preferentially.

Also, an information terminal according to the present invention includes a receiving portion for receiving information containing a content; a means for storing an attribute of an information receiver end set previously; a means for storing trustworthiness information being set previously in answer to recommender information of the content; a regenerated information analyzing portion for analyzing regenerating/controlling information indicating a method of regenerating the content that is contained in received information and composed of one media or more; a target hit deciding portion for deciding whether or not the information receiver end corresponds to user's conditions, based on user's condition information that designates the attribute of the information receiver end contained in received information and the attribute of the information receiver end being set previously; an information evaluating portion for extracting the recommender information of the content contained in the received information and a degree-of-recommendation information of the content given when the information receiver end corresponds to the user's conditions or a degree-of-recommendation information of the content given when the information receiver end does not correspond to the user's conditions, and then calculating an evaluation value of the content based on the trustworthiness information being set previously in answer to the recommender information of the content and the degree-of-recommendation information given when the information receiver end corresponds to the user's conditions when the information receiver end satisfies the user's conditions, or calculating an evaluation value of the content based on the trustworthiness information being set previously in answer to the recommender information of the content and the degree-of-recommendation information given when the information receiver end does not correspond to the user's conditions when the information receiver end does not satisfy the user's conditions; and an information regeneration processing portion for regenerating received content in answer to the regenerating/controlling information and the evaluation value of the content.

According to this configuration, the evaluation value of the content can be calculated based on the trustworthiness information being set previously to the recommender information of the content and the degree-of-recommendation of the content. Therefore, the content whose evaluation value is high can be regenerated.

An information providing method according to the present invention of providing information from an information providing system to one information terminal or more, the method includes the information providing system distributes a content, recommender information of the content, and degree-of-recommendation information of the content, and the information terminal calculates an evaluation value of the content based on trustworthiness information being set previously in answer to recommender information of the content and the degree-of-recommendation information of the content.

According to this configuration, the evaluation value of the content can be calculated based on the trustworthiness information being set previously to the recommender information of the content and the degree-of-recommendation of the content. Therefore, the content whose evaluation value is high can be provided preferentially.

Also, an information providing method according to the present invention of providing information from an information providing system to one information terminal or more, the method includes the information providing system distributes the information containing a content, user's condition information designating an attribute of an information receiver end, recommender information of the content, and degree-of-recommendation information of the content given when the information receiver end corresponds to the user's conditions or degree-of-recommendation information of the content given when the information receiver end does not correspond to the user's conditions, and the information terminal decides whether or not an attribute of the information receiver end set previously corresponds to the user' s condition information, and then calculates an evaluation value of the content based on trustworthiness information being set previously in answer to the recommender information of the content and the degree-of-recommendation information of the content given when the information receiver end corresponds to the user's conditions when the information receiver end satisfies the user's conditions, or calculating an evaluation value of the content based on trustworthiness information being set previously in answer to the recommender information of the content and the degree-of-recommendation information of the content given when the information receiver end does not correspond to the user's conditions when the information receiver end does not satisfy the user's conditions.

According to this configuration, the evaluation value corresponding to the trustworthiness of the recommender and the user's conditions can be obtained. Therefore, the content that is appropriate to the attribute of the information receiver end can be provided preferentially.

### <Advantage of the Invention>

According to the present invention, the user's privacy can be protected by preventing misappropriation and leakage of the private information of the user, and also an evaluation value of the content can be calculated by using a recommender of the content that the information provider provides, a degree-of-recommendation given by the recommender, and trustworthiness of the recommender estimated by the user. Therefore, the content that is evaluated to be more appropriate to the user can be provided preferentially.

### <Brief Description of the Drawings>

FIG.1 is a block diagram showing an information terminal of an embodiment of the present invention.
FIG. 2 is a flowchart explaining a method of processing received information in the information terminal of the embodiment of the present invention.
FIG.3is a view showing a configuration of an information providing system of the embodiment of the present invention.
FIG.4 is a view showing an example of regenerating/controlling information of the embodiment of the present invention.
FIG. 5 is a view showing an example of content attribute information of the embodiment of the present invention.
FIG.6 is a view showing an example of trustworthiness information of the embodiment of the present invention.
FIG. 7 is a view showing an example of a display of received information in the information terminal of the embodiment of the present invention.

### <Description of Reference Numerals and Signs>

- 101: receiving portion
- 102: regenerated information analyzing portion
- 103: information evaluating portion
- 104: information storing portion
- 105: target hit deciding portion
- 106: information regenerating/processing portion
- 300: information distributing server
- 301 to 303: information terminal
- 311 to 313: information providing server
- 320: core network
- 321 to 323: base station
- 330: Internet
- 350: information providing system

### <Best Mode for Carrying out the Invention>

Embodiments of the present invention will be explained in details with reference to the drawings hereinafter.

A gist of the present invention is constructed such that evaluation values of respective received contents are calculated by using recommender information contained in attribute information annexed to the contents that an information provider provides, degree-of-recommendation information given by the recommender, and trustworthiness information of the recommender estimated by an information receiver end, and then more important contents to the information receiver end are offered. Also, the present invention is constructed such that the degree-of-recommendation information given by the recommender is differentiated in response to the user's characteristic of the information receiver end.

### (Embodiment)

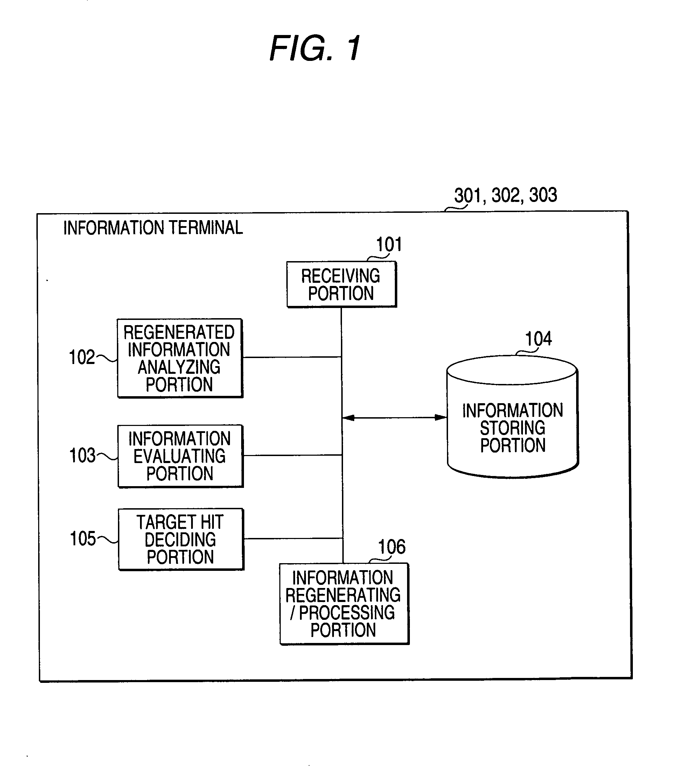

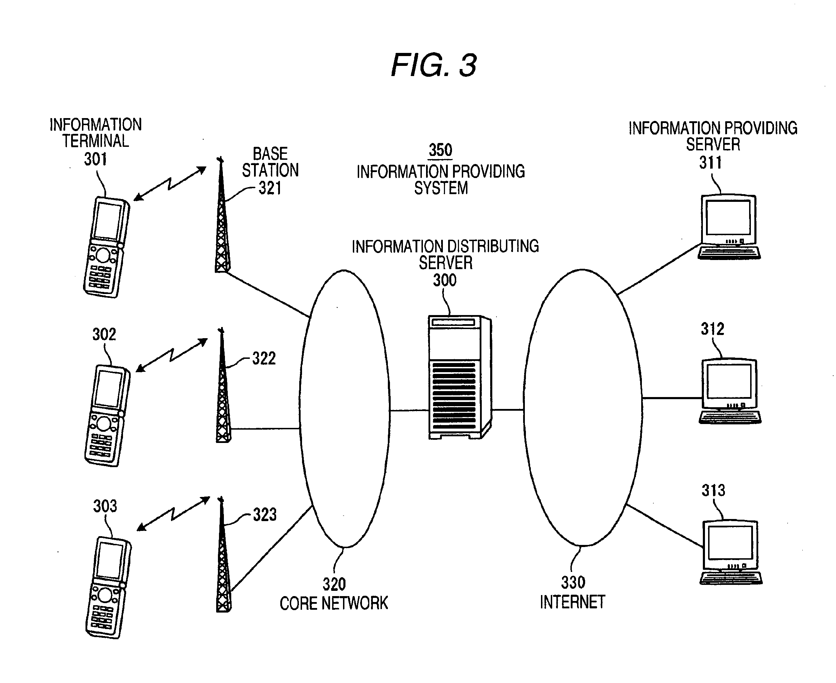

FIG.1 to FIG. 7 are views explaining the embodiment of the present invention. At first, a configuration of an information providing system will be explained with reference to FIG.3 hereunder.

As shown in FIG.3, an information providing system 350 is established by an information distributing server (broadcasting server) 300 for transmitting data as an information providing machine, a plurality of information terminals 301 to 303 such as cellular phones, PDAs (Personal Digital Assistants), and the like, a plurality of information providing servers 311 to 313 for providing the content to the information distributing server 300 via the Internet 330, and base stations 321 to 323 for receiving the data from the information distributing server 300 via a core network 320 and transmitting the data to the information terminal 301 to 303. Here, respective numbers of the information terminals 301 to 303, the information providing servers 311 to 313, and the base stations 321 to 323 are not particularly restricted.

Next, a configuration of each of the information terminals 301 to 303 will be explained with reference to FIG.1 hereunder. FIG.1 is a block diagram showing the information terminal.

Each of the information terminals 301 to 303 includes a receiving portion 101, a regenerated information analyzing portion 102, an information evaluating portion 103, an information storing portion 104, a target hit deciding portion 105, and an information regenerating/processing portion 106. Also, each of the information terminals 301 to 303 includes an input operating portion (not shown), a displaying portion (not shown), an input/output controlling portion (not shown), and the like.

The receiving portion 101 executes a reception of data including a reception of the broadcast information.

The regenerated information analyzing portion 102 has a function of analyzing the regenerating/controlling information contained in the broadcast information. The regenerating/controlling information is the information that contains reference information of media such as audio, video, and the like and layout information about a display position.

The information evaluating portion 103 has a function of calculating the evaluation value of the received content by a method described later. The evaluation value of the content corresponds to importance information (priority information) of the content.

The information storing portion 104 is a storing portion that stores user's information and received information. This information storing portion 104 constitutes a means for storing trustworthiness information set previously by the user in response to the recommender information of the content, and a means for storing attributes of the information receiver ends being set previously.

The target hit deciding portion 105 has a function of deciding whether or not the attribute (user's characteristic or user's situation) of the information receiver end corresponds to the target condition that the information provider.

The information regenerating/processing portion 106 has a function of regenerating the content based on the regenerating/controlling' information.

Next, a method of regenerating the information in each of the information terminals 301 to 303 will be explained hereunder.

The information distributing server 300 distributes broadcast information containing media information consisting of plural media such as audio, video, and the like, regenerating control information about a regenerating method such as a regenerating timing, a display position, etc. of the media; content attribute information of respective media derived from the regenerating control information, and target information as condition information used to designate user's characteristic features or user's situations to the information terminals 301 to 303 respectively.

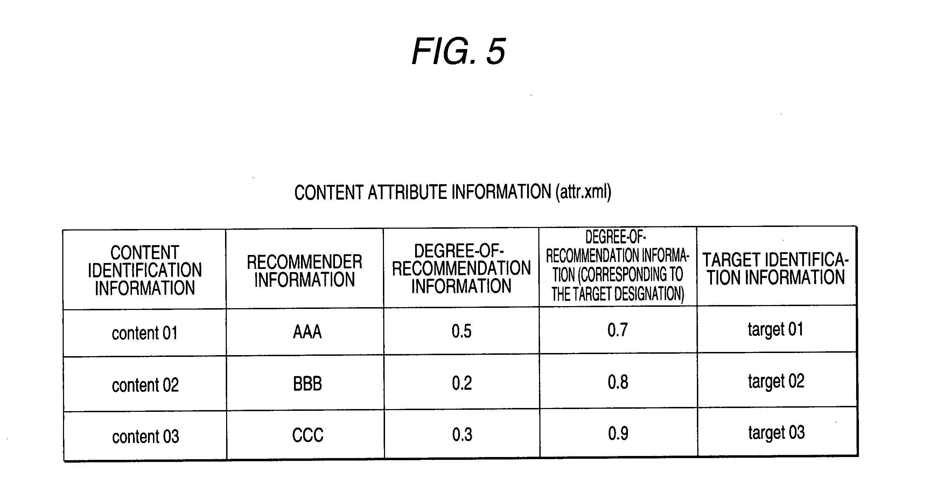

FIG.5 shows the content attribute information in the present embodiment.

The content attribute information shown in FIG.5 contains content identification information, recommender information, degree-of-recommendation information, and target identification information with regard to three contents respectively. The degree-of-recommendation information is composed of first degree-of-recommendation information that is selected ordinarily, and second degree-of-recommendation information selected when the information receiver end satisfies the target information given by the target identification information.

The target identification information is information used to identify the condition information that designates a feature or a situation of the information receiver end. The target identification information "target 01", "target 02", "target 03" designate the target information respectively. The target information (not shown) is the condition information that is composed of information on the user such as "30 years old and woman", "movie fan", or the like, for example.

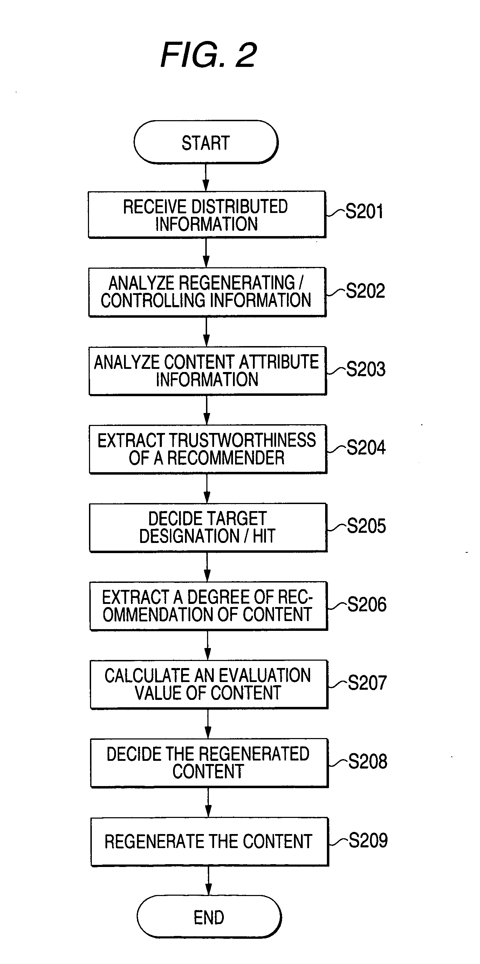

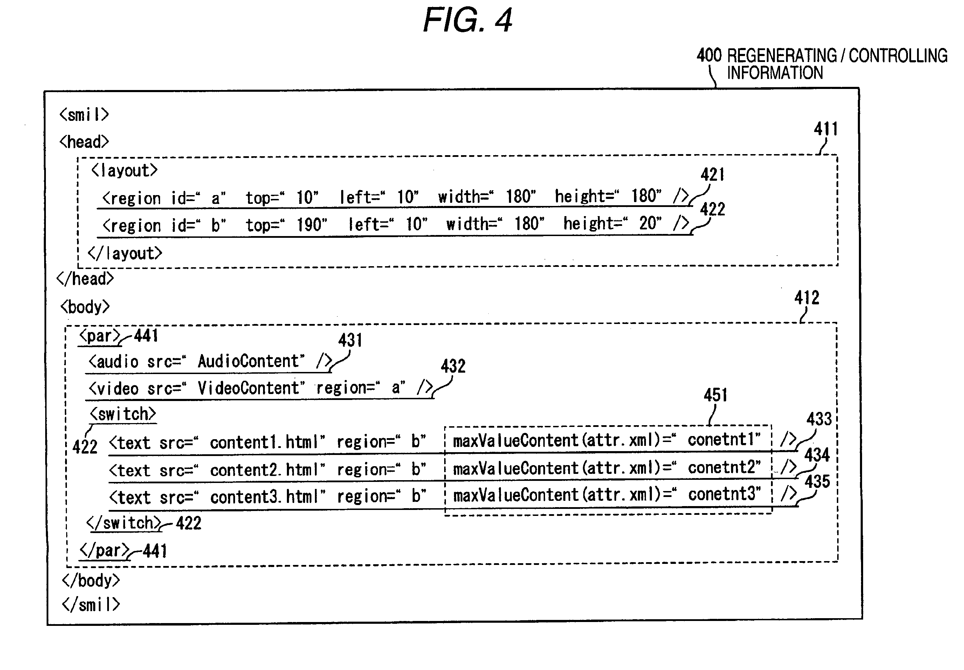

Then, processes that are gone through when the information terminal 301 receives the broadcast information containing plural pieces of media information, regenerating/controlling information 400 shown in FIG.4, the content attribute information shown in FIG.5, and target information will be explained with reference to a flowchart in FIG.2 hereunder.

In step S201, the receiving portion 101 receives the broadcast information (distributed information.

In step S202, the regenerated information analyzing portion 102 analyzes the regenerating/controlling information that indicates the media regenerating method contained in the broadcast information.

FIG. 4 shows the regenerating/controlling information 400 received in the present embodiment.

The regenerating/controlling information 400 consists of layout information 411 of the media to be displayed, and information 412 concerning the regenerated media containing reference information 431 to 435 to the regenerated media and regenerating timings.

The layout information 411 consists of two layout information 421, 422.

The information 412 concerning the regenerated media indicates that respective media indicated by the reference information can be regenerated simultaneously by control information 441 and any one of three contents indicated by the reference information 433 to 435 by choice information 442.

Therefore, the regenerating/controlling information 400 indicates that audio information indicated by the reference information 431, video information indicated by the reference information 432, and any one of the contents indicated by the reference information 433 to 435 can be regenerated at the same time.

Also, evaluated attribute information 451 is contained in the reference information 433 to 435. This evaluated attribute information 451 indicates that the content that is decided to have a highest evaluation value can be chosen by referring to the content attribute information (attr.xml).

In step S203 shown in FIG.2, the information evaluating portion 103 analyzes the content attribute information (attr.xml) referred to by the evaluated attribute information 451 and shown in FIG.5.

In the content attribute information shown in FIG.5, the attribute information about three contents whose content identification information is given by "content 01", "content 02", "content 03" respectively are shown.

The first content "content 01" indicates that, as the degree-of -recommendation information given by the recommender "AAA", a degree-of-recommendation value of "0.7" is given when the target corresponds to the target "target 01" and a degree-of-recommendation value of "0.5" is given when the target does not correspond to the target "target 01".

The second content "content 02" indicates that, as the degree-of-recommendation information given by the recommender "BBB", a degree-of-recommendation value of "0.8" is given when the target corresponds to the target "target 02" and a degree-of-recommendation value of "0.2" is given when the target does not correspond to the target "target 02".

The third content "content 03" indicates that, as the degree-of-recommendation information given by the recommender "CCC", a degree-of-recommendation value of "0.9" is given when the target corresponds to the target "target 03" and a degree-of-recommendation value of "0.3" is given when the target does not correspond to the target "target 03".

In step S204 shown in FIG.2, the information evaluating portion 103 extracts the trustworthiness of the recommender stored in the information storing portion 104.

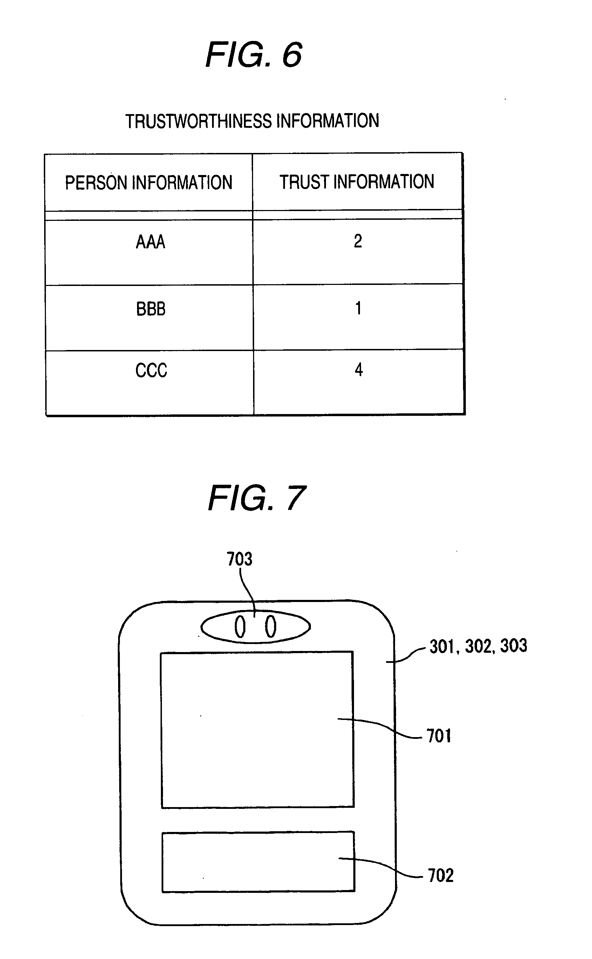

The trustworthiness information stored in the information storing portion 104 is shown in FIG.6. This trustworthiness information is composed of a set of person information and trust information of the person. In the trustworthiness information in FIG.6, trust information (trustworthiness) of a person "AAA" is "2", trust information (trustworthiness) of a person "BBB" is "1", and trust information (trustworthiness) of a person "CCC" is "4". In this case, the larger numerical digit of the trust information (trustworthiness) indicates the higher trustworthiness. Here, the user of the information terminal sets in advance the trust information (trustworthiness) of respective persons.

In this case, it is desired that, when the trustworthiness of some person does not satisfy a predetermined reference value, the evaluation value of the information that the person recommends should be set low in the calculation of the evaluation value.

In step S205 shown in FIG.2, the target hit deciding portion 105 decides whether or not the information receiver end corresponds to the target condition that the information distributor designates, while referring to the target information indicated by respective target identification information "target 01", "target 02", "target 03" of the content attribute information in FIG.5.

In the present embodiment, assume that the information receiver end corresponds to the target information identified by the target identification information "target 01". Thus, the target hit deciding portion 105 decides that the information receiver end corresponds to the target information identified by the target identification information "target 01". For example, when the first target information (target 01) is "woman in her thirties" and the user's information composed of "35 years old" as age information and "woman" as sex information are stored in the information storing portion 104, this information receiver end corresponds to the first target information (target 01).

In step S206, the information evaluating portion 103 extracts a degree of recommendation of respective contents. The degree-of-recommendation information of the content "content 01" regarding the information receiver end corresponding to the first target information (target 01) is "0.7". The degree-of-recommendation information of the contents "content 02", "content 03" regarding the information receiver end not corresponding to the second and third target information (target 02) (target 03) are "0.2", "0.3" respectively.

In step S207, the information evaluating portion 103 calculates the evaluation value of respective contents. The evaluation value is calculated by multiplying the degree-of-recommendation information and the trust information. The evaluation value of the first content "content 01" is given by "0.7×2=1.4". The evaluation value of the second content "content 02" is given by "0.2×1=0.2". The evaluation value of the third content "content 03" is given by "0.3×4=1.2". The information evaluating portion 103 decides that the evaluation value of the first content "content 01" is highest.

In step S208, the regenerated information analyzing portion 102 decides that the content indicated by the reference information 433 and having the highest evaluation value among the contents indicated by the reference information 433 to 43.5 is the regenerated content.

In step S209, the information regenerating/processing portion 106 regenerates simultaneously the audio information indicated by the reference information 431, the video information indicated by the reference information 432, and the content (content0l.btml) indicated by the reference information 433.

An example of regenerated display is shown in FIG. 7. In each of the information terminals 301, 302, 303, the video information indicated by the reference information 432 is displayed in a first display area 701, the content (content01.html) indicated by the reference information 433 is displayed in a second display area 702, and the audio information indicated by the reference information 431 is output from a speaker 703.

In this manner, according to the present embodiment, the evaluation values can be given to the received information by using the recommender information of respective contents contained in the broadcast information, the degree-of-recommendation information that the recommender provides, and the trustworthiness of the recommender estimated by the information receiver end. Therefore, even in the distribution of broadcast data that provides the similar information to a plurality of information terminals, the information that are more important to the information receiver end can be provided preferentially.

In the present embodiment, an example where one content is chosen from three contents indicated by the regenerating/controlling information is illustrated. The present embodiment is not limited to the case where the content indicated by the regenerating/controlling information is selected, and may be used to offer the contents that are received separately. Also, the evaluation value calculating method of the present embodiment may be utilized in assigning a priority to the content received at any timing by any method or selecting the content that is offered to the user. In addition, when a plurality of contents are to be displayed as a list, the contents whose evaluation value is high may be displayed preferentially in a top area of the list based on the calculated evaluation value.

The present invention is explained in detail with reference to particular embodiments. But it is obvious for those skilled in the art that various variations and modifications can be applied without departing from a spirit and a scope of the present invention.

This application is based upon Japanese Patent Application (Patent Application No.2005-011269) filed on January 19, 2005; the contents of which are incorporated herein by reference.

### <Industrial Applicability>

The present invention possesses such an advantage that the user's private information can be protected by preventing misappropriation and leakage of the user's private information, and also evaluation values of the contents can be calculated by using a recommender of the content that the information provider provides, a degree-of-recommendation given by the recommender, and trustworthiness of the recommender estimated by the user, and is useful to the information terminal such as a cellular phone, a mobile information terminal, a notebook personal computer, a personal computer on a network established by a radio LAN or a cable LAN, and the like, the information providing server, and the information providing method.

## Claims

1. An information terminal, comprising:
a receiving portion for receiving information containing a content;
a means for storing trustworthiness information being set previously in answer to recommender information of the content; and
an information evaluating portion for extracting the recommender information of the content contained in received information and a degree-of-recommendation of the content, and then calculating an evaluation value of the content based on the trustworthiness information being set previously in answer to recommender information of the content and the degree-of-recommendation of the content.

2. An information terminal, comprising:
a receiving portion for receiving information containing a content;
a means for storing an attribute of an information receiver end being set previously;
a means for storing trustworthiness information being set previously in answer to recommender information of the content;
a target hit deciding portion for deciding whether or not the information receiver end corresponds to user' s conditions, based on user's condition information that designates the attribute of the information receiver end contained in received information and the attribute of the information receiver end being set previously; and
an information evaluating portion for extracting the recommender information of the content contained in the received information and a degree-of-recommendation information of the content given when the information receiver end corresponds to the user's conditions or a degree-of-recommendation information of the content given when the information receiver end does not correspond to the user's conditions, and then calculating an evaluation value of the content based on the trustworthiness information being set previously in answer to the recommender information of the content and the degree-of-recommendation information given when the information receiver end corresponds to the user's conditions when the information receiver end satisfies the user's conditions, or calculating an evaluation value of the content based on the trustworthiness information being set previously in answer to the recommender information of the content and the degree-of-recommendation information given when the information receiver end does not correspond to the user's conditions when the information receiver end does not satisfy the user's conditions.

3. An information terminal, comprising:
a receiving portion for receiving information containing a content;
a means for storing trustworthiness information being set previously in answer to recommender information of the content;
a regenerated information analyzing portion for analyzing regenerating/controlling information indicating a method of regenerating the content that is contained in received information and composed of one media or more;
an information evaluating portion for extracting the recommender information of the content contained in the received information and a degree-of-recommendation information of the content, and then calculating an evaluation value of the content based on the trustworthiness information being set previously in answer to the recommender information of the content and the degree-of-recommendation information of the content; and
an information regeneration processing portion for regenerating received content in answer to the regenerating/controlling information and the evaluation value of the content.

4. An information terminal, comprising:
a receiving portion for receiving information containing a content;
a means for storing an attribute of an information receiver end being set previously;
a means for storing trustworthiness information being set previously in answer to recommender information of the content;
a regenerated information analyzing portion for analyzing regenerating/controlling information indicating a method of regenerating the content that is contained in received information and composed of one media or more;
a target hit deciding portion for deciding whether or not the information receiver end corresponds to user' s conditions, based on user's condition information that designates the attribute of the information receiver end contained in received information and the attribute of the information receiver end being set previously;
an information evaluating portion for extracting the recommender information of the content contained in the received information and a degree-of-recommendation information of the content given when the information receiver end corresponds to the user's conditions or a degree-of-recommendation information of the content given when the information receiver end does not correspond to the user's conditions, and then calculating an evaluation value of the content based on the trustworthiness information being set previously in answer to the recommender information of the content and the degree-of-recommendation information given when the information receiver end corresponds to the user's conditions when the information receiver end satisfies the user's conditions, or calculating an evaluation value of the content based on the trustworthiness information being set previously in answer to the recommender information of the content and the degree-of-recommendation information given when the information receiver end does not correspond to the user's conditions when the information receiver end does not satisfy the user's conditions; and
an information regeneration processing portion for regenerating received content in answer to the regenerating/controlling information and the evaluation value of the content.

5. An information providing method of providing information from an information providing system to one information terminal or more, the method comprising
the information providing system distributes a content, recommender information of the content, and degree-of-recommendation information of the content, and
the information terminal calculates an evaluation value of the content based on trustworthiness information being set previously in answer to recommender information of the content and the degree-of-recommendation information of the content.

6. An information providing method of providing information from an information providing system to one information terminal or more, the method comprising
the information providing system distributes the information containing a content, user' s condition information designating an attribute of an information receiver end, recommender information of the content, and degree-of-recommendation information of the content given when the information receiver end corresponds to the user's conditions or degree-of-recommendation information of the content given when the information receiver end does not correspond to the user's conditions, and
the information terminal decides whether or not an attribute of the information receiver end set previously corresponds to the user's condition information, and then calculates an evaluation value of the content based on trustworthiness information being set previously in answer to the recommender information of the content and the degree-of-recommendation information of the content given when the information receiver end corresponds to the user's conditions when the information receiver end satisfies the user's conditions, or calculating an evaluation value of the content based on trustworthiness information being set previously in answer to the recommender information of the content and the degree-of-recommendation information of the content given when the information receiver end does not correspond to the user's conditions when the information receiver end does not satisfy the user's conditions.
